# EUROPÄISCHE PATENTSCHRIFT

(11) **EP 0 752 745 B1**
(45) Veröffentlichungstag und Bekanntmachung des Hinweises auf die Patenterteilung: **20.10.1999**
(21) Anmeldenummer: 96109842.3
(22) Anmeldetag: 19.06.1996
(51) Int. Cl.: H02G 3/04

(54) **Installationskanal mit einem zu einer Seite offenen metallischen Kanalprofil**
Metallic installation channel opened on one side
Canalisation métallique pour installation électrique ouverte d'un côté

(30) Priorität: 04.07.1995 DE 19524381
(43) Veröffentlichungstag der Anmeldung: 08.01.1997
(73) Patentinhaber: Albert Ackermann GmbH & Co. KG, 51643 Gummersbach (DE)
(72) Erfinder: Fastenroth, Kurt-Helmut, 51647 Gummersbach (DE)
(74) Vertreter: Wilhelm & Dauster Patentanwälte European Patent Attorneys

(56) Entgegenhaltungen:
- DE-A- 2 516 404
- DE-U- 8 708 607
- DE-U- 29 505 894

## Beschreibung

Die Erfindung betrifft einen Installationskanal mit einem zu einer Seite offenen metallischen Kanalprofil zur Aufnahme elektrischer Installationseinrichtungen, mit einer in das Kanalprofil einsetzbaren metallischen Trennwand, die über ihre gesamte Länge mit einem Haltebereich versehen ist, sowie mit Mitteln zum Fixieren und elektrisch leitendem Kontaktieren des Haltebereiches relativ zu dem Kanalprofil, wobei zur klemmenden Aufnahme des Haltebereiches wenigstens zwei parallel und in Abstand zueinander angeordnete Haltezungen fest an einem Boden des Kanalprofiles angeordnet sind, die mit Kontaktspitzen zur elektrisch leitenden Kontaktierung zwischen Kanalboden und Trennwand versehen sind.

Ein solcher Installationskanal ist aus der DE 295 05 894 Ul bekannt. Um in einem Installationskanal zwischen einsteckbaren Trennwänden und dem Kanalboden einen Potentialausgleich vorzusehen, sind am Kanalboden Haltelaschen vorgesehen, die mit schräg abgestellten Kontaktspitzen derart versehen sind, daß beim Einschieben von Fußansätzen der Trennwände in diese Haltelaschen eine entsprechende Potentialausgleichsverbindung geschaffen wird.

Aus der DT 25 16 404 A1 ist ein Kabelführungskanalsystem bekannt, dessen Boden mit Haltezungen zur Aufnahme entsprechender Kanalprofile versehen ist. Die Haltezungen sind im Kanalboden freigestanzt und nach oben herausgebogen.

Es ist auch bekannt (DE-GM 87 08 607), in einem Wandkanal zur Aufnahme elektrischer Installationseinrichtungen eine metallische Trennwand vorzusehen, die den Wandkanal beispielsweise in zwei Züge für Starkstrom- bzw. für Schwachstrominstallationen unterteilt. Zur Halterung der Trennwand am Kanalboden ist an diesem eine C-förmige Schiene vorgesehen, in die ein abgewinkelter Haltebereich der Trennwand einsetzbar ist. Zur Fixierung dieses Haltebereiches in der C-förmigen Schiene sowie zur elektrisch leitenden Kontaktierung zwischen der Trennwand und dem Kanalprofil sind mehrere Klammern vorgesehen, die den Haltebereich der Trennwand in der C-förmigen Schiene festklemmen und außerdem gegenüberliegende Kontaktspitzen in Form von Schneiden aufweisen, die sich in die C-förmige Schiene des Kanalbodens einerseits und in den Haltebereich der Trennwand andererseits aufgrund ihrer Federwirkung eindrücken. Dabei werden die entsprechend im Bereich der C-Schiene und der Trennwand vorhandenen Lackschichten durchbohrt, wodurch eine metallische und damit elektrisch leitende Verbindung zwischen dem Kanalboden und der Trennwand geschaffen wird. Durch diese Maßnahme liegt - wie das Kanalprofil - auch die Trennwand an Masse an, wodurch Spannungen auch über die Trennwand in den Kanalboden und damit in das Kanalprofil abgeleitet werden. Dabei ist die C-förmige Schiene insbesondere durch Verschweißen elektrisch leitend an dem Kanalboden befestigt.

Aufgabe der Erfindung ist es, einen Installationskanal der eingangs genannten Art zu schaffen, der ein vereinfachtes Einsetzen und elektrisch leitendes Kontaktieren der Trennwand ermöglicht.

Diese Aufgabe wird dadurch gelöst, daß die Haltezungen einstückig aus dem Boden des Kanalprofiles ausgeformt und an ihren freien Stirnenden in Form von jeweils einer Einführhilfe schräg nach oben - vom Boden weg - aufgebogen sind, und daß durch eine U-förmige Ausstanzung in jeder Haltezunge eine Kontaktkralle freigelegt ist, die in der Flucht der Einführhilfe vom freien Stirnende weg entgegengesetzt schräg nach innen - zum Boden hin - abragt. Durch die erfindungsgemäße Lösung wird das zusätzliche Vorsehen einer C-förmigen Halteschiene, wie es beim Stand der Technik der Fall ist, vermieden. Die Trennwand ist direkt in die Haltezungen einsetzbar und mittels dieser am Kanalboden festklemmbar. Da die Haltezungen auch bereits mit Kontaktspitzen versehen sind, werden keine zusätzlichen Maßnahmen z.B. Schutzleiter zur Massekontaktierung der Trennwand benötigt. Die Trennwand ist somit mit einfachen Mitteln im Installationskanal montierbar und elektrisch kontaktierbar. Die erfindungsgemäße Lösung ist sowohl für Installationskanäle in Form von Wandkanälen als auch für Installationskanäle in Form von Unterflurkanälen geeignet. Stellt das Kanalprofil ein Blechprofil dar, so sind die Haltezungen in einfacher Weise ausgestanzt und entsprechend ausgeformt. Durch die erfindungsgemäße Lösung wird eine Vereinfachung der Montage erzielt, da die Haltezungen bereits nach der Herstellung des Kanalprofiles fest am Boden des Kanalprofiles angeordnet sind und somit lediglich noch die Trennwand eingesetzt werden muß. Durch die Einführhilfe wird das Einführen der Trennwand in den zwischen den Haltezungen und dem Kanalboden gebildeten Spalt erleichtert, wodurch die Montage der Trennwand vereinfacht wird.

In Ausgestaltung der Erfindung ist der Haltebereich rechtwinklig zu der Trennwand abgewinkelt. Dadurch ist es möglich, die Trennwand rechtwinklig zum Kanalboden einzusetzen und durch Querverschieben entlang des Kanalbodens in die Haltezungen einzuschieben. In der eingeschobenen Endposition des Haltebereiches ragt die Trennwand vorzugsweise lotrecht vom Kanalboden ins Innere des Kanalprofiles, wodurch innerhalb des Kanalprofiles Teilkanäle gebildet werden können.

In weiterer Ausgestaltung der Erfindung sind die Haltezungen elastisch aufbiegbar und begrenzen in ihrer unbelasteten Ruheposition einen Aufnahmespalt, dessen Höhe zumindest abschnittsweise geringer ist als die Materialdicke des abgewinkelten Haltebereiches der Trennwand. Dadurch wird in einfacher Weise eine Klemmung der Trennwand am Kanalboden erzielt.

Weitere Vorteile und Merkmale der Erfindung ergeben sich aus den Unteransprüchen. Nachfolgend ist ein bevorzugtes Ausführungsbeispiel der Erfindung beschrieben und anhand der Zeichnungen dargestellt.
- Fig. 1: zeigt in perspektivischer Darstellung einen Teil einer Ausführungsform eines erfindungsgemäßen Installationskanales, an dessen Kanalboden eine Trennwand gehalten ist,
- Fig. 2: den Installationskanal nach Fig. 1 in einem Zustand, in dem die Trennwand in Haltezungen am Kanalboden eingeführt wird,
- Fig. 3a: einen Querschnitt durch den Installationskanal gemäß Fig. 1,
- Fig. 3b: eine Draufsicht auf den Installationskanal nach Fig. 1 in Richtung des Pfeiles III in Fig. 3a,
- Fig. 4a: einen Querschnitt durch den Installationskanal nach Fig. 2,
- Fig. 4b: eine Draufsicht auf den Installationskanal nach den Fig. 2 und 4a in Richtung des Pfeiles IV in Fig. 4a,
- Fig. 5: in vergrößerter Darstellung einen Ausschnitt V aus Fig. 4b,
- Fig. 6: einen Schnitt durch die Haltezunge gemäß Fig. 5 entlang der Schnittlinie VI-VI in Fig. 5 - ohne eingesetzte Trennwand -, und
- Fig. 7: in vergrößerter Darstellung eine Frontansicht des Ausschnittes VII gemäß Fig. 3a.

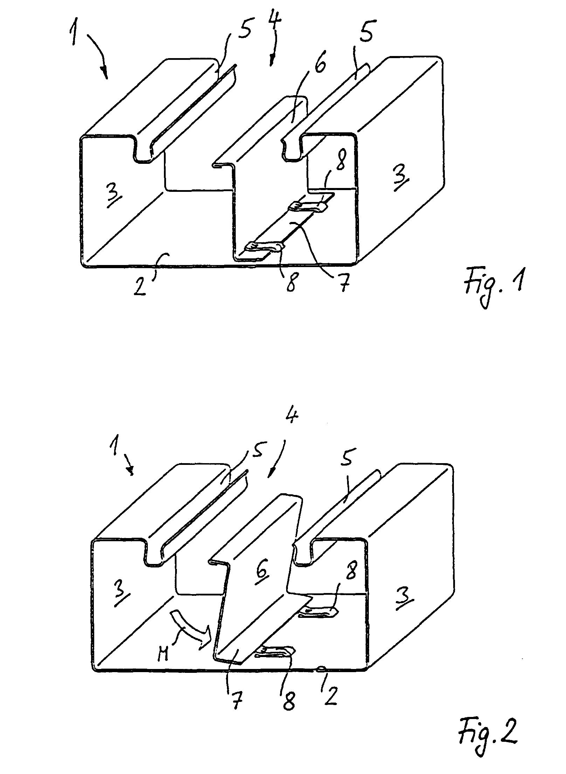

Der Installationskanal nach den Fig. 1 bis 7 stellt einen Wandkanal (1) dar. Der Wandkanal (1) weist ein Kanalprofil (2, 3, 5) auf, das ein C-förmiges Blechprofil darstellt. Das Kanalprofil (2, 3, 5) weist einen Kanalboden (2) sowie zwei Seitenwandungen (3) auf, die unter Bildung einer Vorderseite des Kanalprofiles nach innen gebogen sind. Die Vorderseite des Kanalprofiles weist zwei Längsnuten (5) auf, die eine Kanalöffnung (4) flankieren. Die Kanalöffnung (4) ist in nicht dargestellter Weise mittels eines Deckels verschließbar, der in den Längsnuten (5) fixierbar ist.

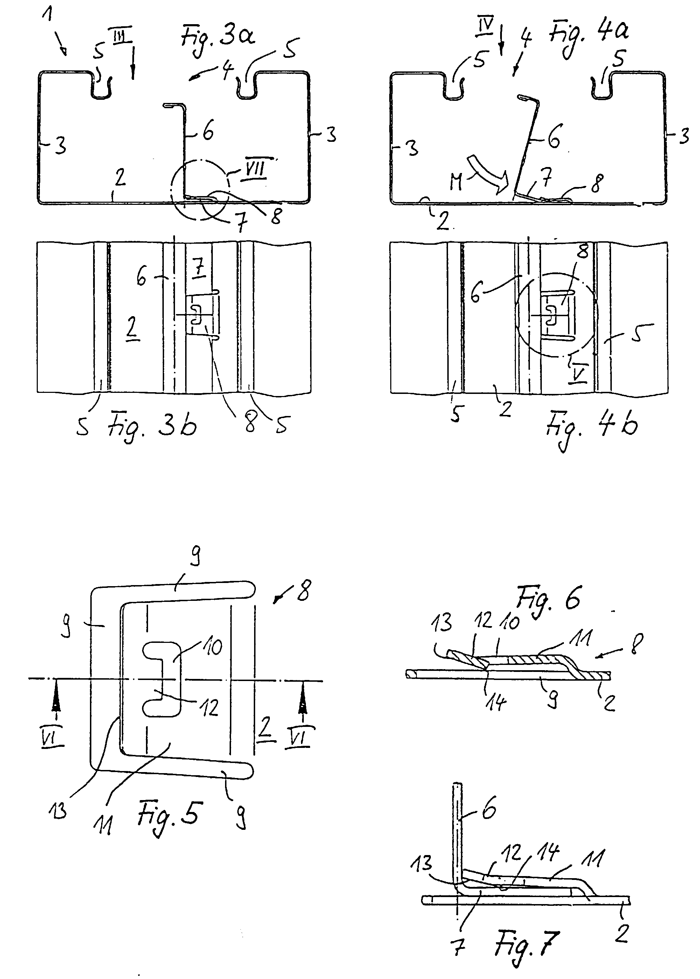

Um im Wandkanal (1) zwei unterschiedliche Stromarten, insbesondere eine Schwachstrom- und eine Starkstrominstallation, verlegen zu können, ist über die gesamte Länge des Wandkanales (1) in diesen eine metallische Trennwand (6) eingesetzt, die als Z-ähnliches Blechwinkelprofil ausgebildet ist. Um eine ausreichende elektrische Sicherheit zu gewährleisten, d.h. insbesondere um an der Trennwand anliegende Spannungen ableiten zu können, müssen das Kanalprofil (2, 3, 5) und die Trennwand (6) das gleiche Potential, insbesondere Masse, aufweisen. Es ist daher zum einen notwendig, daß die Trennwand (6) in dem Kanalprofil (2, 3, 5) mechanisch befestigbar ist. Zum anderen muß die Trennwand (6) auch elektrisch mit dem Kanalprofil (2, 3, 5) kontaktiert sein, um ausreichende Schutzmaßnahmen zu erzielen. Um beide Funktionen mit einfachen Mitteln zu verwirklichen, weist die Trennwand (6) einen rechtwinklig abgewinkelten Haltebereich (7) in Form eines Längssteges auf, mit dem sie am Kanalboden (2) mit Hilfe von Haltezungen (8) befestigt ist. Die Haltezungen (8) sind einstückig aus dem Kanalboden (2) ausgeformt, indem in dem Kanalboden (2) eine U-förmige Ausstanzung (9) (Fig. 5) vorgenommen wurde und die so entstandene Blechlasche (11) entsprechend ins Innere des Wandkanales (1) umgebogen wurde. Die Blechlasche (11) jeder Haltezunge (8) weist außerdem eine weitere, entgegen der Ausstanzung (9) ausgerichtete U-förmige Ausstanzung (10) mit geringerem Querschnitt auf, durch den eine zungenartige Kontaktkralle (12) gebildet wird. Die Kontaktkralle (12) ragt entgegen der Blechlasche (11) vom freien Ende der Blechlasche (11) weg nach hinten. Ein vorderer Bereich der Blechlasche (11) und damit ihr freies Ende ist schräg nach oben aufgebogen und stellt eine Einführhilfe (13) für die Trennwand dar. Da in diesem vorderen Bereich auch die Kontaktkralle (12) ansetzt, ist die Kontaktkralle (12) entsprechend zu der Einführhilfe (13) entgegengerichtet schräg nach innen abgestellt. Die Kontaktkralle (12) ragt somit in den zwischen der Blechlasche (11) der Haltezunge (8) und der Oberfläche des Kanalbodens (2) verbleibenden Spalt hinein. Wie insbesondere aus Fig. 6 erkennbar ist, ist die Blechlasche (11) entsprechend einer Klammer gebogen, da sie zum freien Ende hin bis auf Höhe der Kontaktkralle (14) geringfügig zum Kanalboden (2) hin geneigt ist. Der durch den Kanalboden (2) auf Höhe der Ausstanzung (9) einerseits und die Innenseite der Blechlasche (11) andererseits gebildete Spalt verringert sich somit vom Grund der Blechlasche (11) bis zur Kontaktkralle (14) hin. Durch die nach oben aufgebogene Einführhilfe (13) erweitert sich der Spalt von der Kontaktkralle (14) ausgehend bis zum freien Ende der Blechlasche (11).

Insbesondere auf Höhe der Kontaktkralle (14) ist der zwischen der Innenseite der Blechlasche (11), d.h. der Unterkante der Kontaktkralle (14), und dem Kanalboden (2) im Bereich der Ausstanzung (9) verbleibende Spalt wesentlich geringer als die Materialdicke der Trennwand (6). Das zur Herstellung des Kanalprofils und damit auch des Kanalbodens (2) verwendete Blech weist eine Elastizität auf, die ein elastisches Aufbiegen der Haltezunge (8) und damit der Blechlasche (11) ermöglicht. Die Unterkante der Kontaktkralle (12) bildet eine Konkaktspitze. Zweckmäßig sind lediglich die seitlichen Ecken der Kontaktkralle (12) im Bereich der Unterkanten als Schneiden (14) ausgebildet, wodurch sich als Kontakte zwei blanke Schneidecken ergeben.

Um nun die Trennwand (6) am Kanalboden (2) zu befestigen, wird die Trennwand (6) durch die Kanalöffnung (4) ins Innere des Kanalprofiles (2, 3, 5) gebracht und mittels ihres Haltebereiches (7) in Montagerichtung M (Fig. 2 und 4a bzw. 4b) unter die Haltezungen (8) geschoben. Dazu sind alle Haltezungen (8), beim dargestellten Ausführungsbeispiel lediglich zwei, bei längeren Wandkanälen (1) und entsprechend längeren Trennwänden (6) jedoch mehr als zwei, in gleichmäßigen Abständen in einer Längsflucht entlang des Kanalbodens (2) verteilt angeordnet und ragen quer zur Längsrichtung des Wandkanales (1) ab. Selbstverständlich sind alle Haltezungen (8) zur selben Seite hin offen. Beim dargestellten Ausführungsbeispiel sind die Haltezungen (8) gegenüber der Mitte des Wandkanales (1) so weit seitlich versetzt, daß auch die eingesetzte Trennwand (6) nicht exakt die Mitteltrennebene des Wandkanales (1) bildet. Durch eine entsprechend andere Anordnung der Haltezungen (8) ist jedoch selbstverständlich auch eine exakt mittige Ausrichtung der Trennwand (6) erzielbar und es können durch unterschiedliche Plazierungen der Halterungen (6) unterschiedliche Kanalteilungen erreicht werden.

Zur Montage der Trennwand (6) wird diese nach dem Einsetzen in die Kanalöffnung (4) gemäß den Fig. 2 und 4a derart schräggestellt, daß die Vorderkante des Haltebereiches (7) auf Höhe der Einführhilfen (13) positioniert ist. Durch ein anschließendes Einschieben des Haltebereiches (7) unter die Haltezungen (8) in Montagerichtung M klemmen die Haltezungen (8) den Haltebereich (7) und damit die Trennwand (6) gegen den Kanalboden (2). Beim Einschieben des Haltebereiches (7) schaben die Schneiden (14) der Kontaktkrallen (12) auf der Oberfläche des Haltebereiches (7) entlang, wodurch in diesem Bereich die auf der Trennwand (6) vorhandene Lackschicht abgetragen wird. Da auch die Schneiden (14) blank sind, ergibt sich zwischen dem Haltebereich (7) und den Kontaktkrallen (12) ein metallischer Kontakt, der eine elektisch leitende Verbindung schafft. Dadurch liegt an der Trennwand (6) das gleiche Potential wie an dem Kanalboden (2) an. Ist das Kanalprofil (2, 3, 5) und damit auch der Kanalboden (2) an Masse angelegt, so liegt auch die Trennwand (6) auf Masse. In der gemäß Fig. 7 eingeschobenen Endposition des Haltebereiches (7) liegt die Vorderkante der Einführhilfe (13) an dem vertikalen Bereich der Trennwand (6) an. Gleichzeitig bilden die Schneiden (14) jeder Kontaktkralle (12) aufgrund der schrägen Abstellung der Kontaktkrallen (12) einen Widerhaken, der ein selbsttätiges Lösen der Trennwand (6) aus den Haltezungen (8) verhindert. Somit wird mit einfachen Mitteln eine mechanisch sichere Positionierung und Fixierung der Trennwand (6) im Kanalprofil (2, 3, 5) und gleichzeitig selbsttätig eine elektrisch leitende Kontaktierung erzielt.

## Patentansprüche

1. Installationskanal (1) mit einem zu einer Seite offenen metallischen Kanalprofil (2, 3) zur Aufnahme elektrischer Installationseinrichtungen, mit einer in das Kanalprofil (2, 3) einsetzbaren metallischen Trennwand (6), die über ihre gesamte Länge mit einem Haltebereich (7) versehen ist, sowie mit Mitteln (8 bis 13) zum Fixieren und elektrisch leitenden Kontaktieren des Haltebereiches (7) relativ zu dem Kanalprofil (2, 3), wobei zur klemmenden Aufnahme des Haltebereiches (7) wenigstens zwei parallel und in Abstand zueinander angeordnete Haltezungen (11) fest an einem Boden (2) des Kanalprofiles (2, 3) angeordnet sind, die mit Kontaktspitzen (14) zur elektrisch leitenden Kontaktierung zwischen Kanalboden (2) und Trennwand (6) versehen sind,
**dadurch gekennzeichnet,**
daß die Haltezungen (8) einstückig aus dem Boden (2) des Kanalprofiles (2, 3, 5) ausgeformt und an ihren freien Stirnenden in Form von jeweils einer Einführhilfe (13) schräg nach oben - vom Boden (2) weg - aufgebogen sind, und daß durch eine U-förmige Ausstanzung (10) in jeder Haltezunge (8) eine Kontaktkralle (12) freigelegt ist, die in der Flucht der Einführhilfe (13) vom freien Stirnende weg entgegengesetzt schräg nach innen - zum Boden (2) hin - abragt.

2. Installationskanal nach Anspruch 1, dadurch gekennzeichnet, daß der Haltebereich (7) rechtwinklig zu der Trennwand (7) abgewinkelt ist.

3. Installationskanal nach Anspruch 1 oder 2, dadurch gekennzeichnet, daß die Haltezungen (8) elastisch aufbiegbar sind und in ihrer unbelasteten Ruheposition einen Aufnahmespalt begrenzen, dessen Höhe zumindest abschnittsweise geringer ist als die Materialdicke des abgewinkelten Haltebereiches (7) der Trennwand (6).

## Claims

1. Installation channel (1) having a metal channel profile (2, 3), which is open towards one side, for receiving electrical installation devices, and having a metal dividing wall (6) which is insertable into the channel profile (2, 3) and which is provided along its entire length with a holding region (7), and having means (8 to 13) for the fixing and electrically conductive contacting of the holding region (7) relative to the channel profile (2, 3), at least two holding tongues (11) which are arranged parallel with and spaced from one another being arranged securely on a base (2) of the channel profile (2, 3) for receiving with clamping the holding region (7) and being provided with contact tips (14) for the electrically conductive contacting between the channel base (2) and the dividing wall (6), characterised in that the holding tongues (8) are formed integral with the base (2) of the channel profile (2, 3, 5) and are bent obliquely upwards - away from the base (2) - at their free end faces in the form of an insertion aid (13), and in that a contact claw (12) is exposed by a U-shaped punched-out aperture (10) in each holding tongue (8) and protrudes obliquely inwards - towards the base (2) - in alignment with the insertion aid (13) away from the free end face.

2. Installation channel according to claim 1, characterised in that the holding region (7) is bent at right-angles to the dividing wall (7).

3. Installation channel according to claim 1 or 2, characterised in that the holding tongues (8) can be bent resiliently upwards and, in their unloaded rest position, delimit a receiving gap whose height is smaller at least in portions than the material thickness of the bent holding region (7) of the dividing wall (6).

## Revendications

1. Gaine technique (1), comportant un profil de gaine métallique (2, 3), ouvert vers un côté, destiné à recevoir des équipements d'installation électrique ; une cloison de séparation métallique (6), pouvant être insérée dans le profil de gaine (2, 3), et qui sur toute sa lon-gueur est pourvue d'une zone d'arrêt (7) ; ainsi que des moyens (8 à 13), destinés à fixer la zone d'arrêt (7) et à en assurer un contact conducteur de l'électricité, par rapport au profil de gaine (2, 3) ; auquel cas, pour assurer le logement avec effet de serrage de la zone d'arrêt (7), au moins deux languettes de retenue (11), disposées parallèlement l'une à l'autre et à une certaine distance l'une de l'autre, sont disposées à demeure contre un fond (2) du profil de gaine (2, 3), languettes qui sont pourvues de pointes de contact (14) pour assurer un contact conducteur de l'électricité entre le fond de gaine (2) et la cloison de séparation (6), caractérisée en ce que les languettes de retenue (8) sont réalisées d'une manière monobloc à partir du fond (2) du profil de gaine (2, 3, 5), et, au niveau de leurs extrémités frontales libres, sont repliées obliquement vers le haut - en partant du fond (2) - sous forme de pièces auxiliaires d'insertion (13), et en ce qu'une griffe de contact (12) est dégagée par une décou-pure (10) en forme de U aménagée dans chaque languette de retenue (8), griffe qui dépasse obliquement vers l'intérieur - vers le fond (2) - en alignement avec la pièce auxiliaire d'insertion (13), et en s'éloignant de l'extrémité frontale libre.

2. Gaine technique selon la revendication 1, caractérisée en ce que la zone d'arrêt (7) est repliée perpendiculairement à la cloison de séparation (7).

3. Gaine technique selon la revendication 1 ou 2, caractérisée en ce que les languettes de retenue (8) peuvent être repliées d'une manière élastique, et, dans leur position de repos sans sollicitation, délimitent une fente servant de logement, dont la hauteur est au moins par segments plus petite que l'épaisseur de matériau de la zone d'arrêt (7), repliée, de la cloison de séparation (6).
